# EUROPÄISCHE PATENTSCHRIFT

(11) **EP 1 435 169 B1**
(45) Veröffentlichungstag und Bekanntmachung des Hinweises auf die Patenterteilung: **02.07.2008**
(21) Anmeldenummer: 02801304.3
(22) Anmeldetag: 01.10.2002
(51) Int. Cl.: H04M 7/00

(54) **VERFAHREN ZUR HERSTELLUNG EINER KOMMUNIKATIONSVERBINDUNG ZWISCHEN TEILNEHMERSTELLEN EINES ZWEI KOMMUNIKATIONSNETZE UMFASSENDEN VERMITTLUNGSSYSTEMS**
METHOD FOR ESTABLISHING A COMMUNICATION LINK BETWEEN SUBSCRIBER STATIONS OF A SWITCHING SYSTEM WHICH COMPRISES TWO COMMUNICATION NETWORKS
PROCEDE D'ETABLISSEMENT D'UNE LIAISON DE COMMUNICATION ENTRE DES POSTES TELEPHONIQUES D'ABONNES D'UN SYSTEME DE COMMUTATION COMPRENANT DEUX RESEAUX DE TELECOMMUNICATION

(30) Priorität: 12.10.2001 EP 01124526
(43) Veröffentlichungstag der Anmeldung: 07.07.2004
(73) Patentinhaber: Nokia Siemens Networks GmbH & Co. KG, 81541 München (DE)
(72) Erfinder: KNÄBCHEN, Andreas, 81377 München (DE)
(86) Internationale Anmeldenummer: PCT/EP2002/011018
(87) Internationale Veröffentlichungsnummer: WO 2003/034703

(56) Entgegenhaltungen:
- EP-A- 0 905 959
- WO-A-00/31933
- WO-A-97/28628
- US-A- 4 764 919
- US-B1- 6 205 135
- US-B1- 6 292 553
- GBAGUIDI C ET AL: "INTEGRATION OF INTERNET AND TELECOMMUNICATIONS: AN ARCHITECHTURE FOR HYBRID SERVICES" IEEE JOURNAL ON SELECTED AREAS IN COMMUNICATIONS, IEEE INC. NEW YORK, US, Bd. 17, Nr. 9, September 1999 (1999-09), Seiten 1563-1578, XP000851771 ISSN: 0733-8716

## Beschreibung

Die Erfindung bezieht sich auf ein Verfahren zur Herstellung einer Kommunikationsverbindung zwischen anrufenden und anzurufenden Teilnehmerstellen,
- wobei die Teilnehmerstellen an Vermittlungsstellen eines ersten Kommunikationsnetzes, insbesondere eines Zeitmultiplex-Vermittlungsnetzes, angeschlossen sind,
- wobei die Vermittlungsstellen mittels Übergangseinrichtungen durch ein zweites Kommunikationsnetz, insbesondere ein Paket-Vermittlungsnetz wie ein IP-Netz, miteinander verbunden sind,
- wobei den Übergangseinrichtungen gesonderte Steuereinrichtungen zugeordnet sind, die einen Verbindungsverkehr über die ihnen jeweils zugeordneten Übergangseinrichtungen steuern und
- wobei für eine anzurufende Teilnehmerstelle an einer Vermittlungsstelle eine Rufumleitung zu einer anderen Teilnehmerstelle an einer anderen Vermittlungsstelle gespeichert wird,

Unter einem IP-Netz wird hier ein Vermittlungs- und Übertragungsnetz verstanden, in welchem Kommunikationssignale auf der Basis eines Internet-Protokolls vermittelt bzw. übertragen werden.

Vermittlungsnetzkonfigurationen der vorstehend erwähnten Art werden zukünftig konventionelle Kommunikationsnetze, wie Zeitmultiplex-Vermittlungsnetze, ergänzen oder sogar ablösen. In den Übergangseinrichtungen zwischen den Vermittlungsstellen des ersten Kommunikationsnetzes und dem zweiten Kommunikationsnetz erfolgt dann eine Umsetzung der jeweils zu übertragenden Kommunikationssignale entsprechend den jeweiligen Netzbedingungen. Ist das erste Kommunikationsnetz ein Zeitmultiplex-Vermittlungsnetz, wie beispielsweise das unter der Bezeichnung EWSD kommerziell eingesetzte Kommunikationsnetz, und handelt es sich bei dem zweiten Kommunikationsnetz um zum Beispiel ein Paket-Vermittlungsnetz, wie ein IP-Netz, so ist in den Übergangseinrichtungen zwischen den Vermittlungsstellen des ersten Kommunikationsnetzes und dem zweiten Kommunikationsnetz jeweils eine Umsetzung von Zeitmultiplexsignalen in Paketsignalen und umgekehrt von Paketsignalen in Zeitmultiplexsignale erforderlich. Dies heißt, dass im Falle einer Kommunikationsverbindung zwischen einer an einer Vermittlungsstelle des ersten Kommunikationsnetzes angeschlossenen anrufenden Teilnehmerstelle und einer ebenfalls an einer Vermittlungsstelle des ersten Kommunikationsnetzes, insbesondere einer anderen Vermittlungsstelle des betreffenden ersten Kommunikationsnetzes angeschlossenen anzurufenden Teilnehmerstelle eine zweifache Signalumsetzung entsprechend den zuvor betrachteten Signalumsetzungen erforderlich ist. Dies bedingt eine relativ hohe Umsetzleistung und damit Rechnerleistung in den zwischen den betreffenden Vermittlungsstellen des ersten Kommunikationsnetzes und dem zweiten Kommunikationsnetz vorgesehenen Übergangseinrichtungen, die im Regelfall rechnergesteuert sind, um möglichst schnelle Umsetzungen der Kommunikationssignale zu erreichen. Solche schnellen Umsetzungen der Kommunikationssignale sind erforderlich, damit die durch die betreffenden Umsetzungen hervorgerufenen Verzögerungen bei der Weiterleitung von Kommunikationssignalen nicht als störend und die Qualität der jeweiligen Kommunikationsverbindung herabsetzend empfunden werden.

Zusätzlich zu dem vorstehend aufgezeigten Problem tritt noch ein weiteres, gegebenenfalls gravierenderes Problem im Falle einer Anrufweiter- bzw. -um-leitung bezüglich einer anzurufenden Teilnehmerstelle auf. Bei einer solchen Anrufumleitung wird nämlich in konventioneller Weise eine Kommunikationsverbindung zunächst zu der Vermittlungsstelle hin aufgebaut, an der die anzurufende Teilnehmerstelle bisher erreichbar war, und sodann wird von dieser Vermittlungsstelle aus eine Umleitungs-Kommunikations-verbindung zu der Vermittlungsstelle hin aufgebaut, an der die betreffende anzurufende Teilnehmerstelle nunmehr erreichbar ist. Dies bedeutet aber unter Zugrundelegung der eingangs betrachteten Vermittlungssystemkonfiguration, dass zusätzlich zu den zuvor betrachteten Umsetzvorgängen weitere Umsetzvorgänge bezüglich der jeweils zu übertragenen Kommunikationssignale zwischen anrufender und anzurufender Teilnehmerstelle auszuführen sind. Damit sind dann aber merkliche Verzögerungszeiten und damit eine Qualitätsverschlechterung bei der Übertragung der jeweiligen Kommunikationssignale zwischen anrufender Teilnehmerstelle und anzurufender Teilnehmerstelle verbunden.

Diese Verzögerungszeiten resultieren dabei hauptsächlich aus Paketierungs- und Depaketierungsvorgängen infolge der Übergänge zwischen den genannten Vermittlungsnetzen. Unter Zugrundelegung einer typischen Paketierungs- bzw. Depaketierungszeit zwischen 10 und 30 ms und einem durch die Empfindlichkeit des menschlichen Gehörs gegenüber Schallverzögerungen gegebenen Verzögerungs-Schwellwert von etwa 100 ms wird eine n-fache Umsetzung von Kommunikationssignalen, durch die die sich dadurch ergebende Umsetzungs-Gesamtverzögerungszeit den genannten Schwellwert überschreitet, als nicht mehr hinnehmbar empfunden.

Im Zusammenhang mit dem gerade erwähnten Verzögerungs-Schwellwert ist überdies zu berücksichtigen, dass im Zuge der jeweiligen Kommunikationsverbindung noch verzögerungsreiche Wegeabschnitte enthalten sein können, wie eine oder mehrere Mobilfunkstrecken oder eine Satellitenstrecke.

Zur Lösung dieses Problems sind aus dem Stand der Technik einige Schriften bekannt:

In der EP 0 905 959 A2, "A packet switched network telephone system", vom 31.3.1999 wird dazu etwa ein Telefonsystem offenbart, mit dem eine Verbindung zwischen zwei Telefonen über ein paketvermittelndes Netzwerk durch Austausch von Netzwerkadressen geschalten werden kann. Außerdem ermöglicht das System eine Reihe von zusätzlichen Diensten, wie zum Beispiel die Dienste Rückruf, Rufweiterleitung, Anklopfen und vieles mehr. Bei der Rufweiterleitung beispielsweise wird von einem Quell-Vermittlungsknoten, an dem das rufende Telefon angeschlossen ist, versucht, eine Verbindung zu einem gerufenen Telefon aufzubauen, in Unkenntnis, dass für dieses gerufene Telefon eine Rufweiterleitung gespeichert ist. In Folge wird vom Ziel-Vermittlungsknoten, an dem das zu rufende Telefon angeschlossen ist, die neue Rufnummer an den Quell-Vermittlungsknoten übermittelt, welcher hierauf eine direkte Verbindung zu dem neuen Rufziel aufbaut.

Weiterhin wird in der US 4,764,919, "Virtual PBX call processing method", vom 16.8.1988 einer Gruppe von Benutzern in einem Paketdatennetz eine virtuelle PBX-Funktionalität zugänglich gemacht. Die Benutzerstationen tauschen dabei Signalisierungsinformation über virtuelle Verbindungen aus und verarbeiten diese Information, um die Rufsteuerung durchzuführen. Dabei werden Dienste wie Rufweiterleitung oder automatischer Rückruf ohne Hilfe des Paketdatennetzes durchgeführt. Bei der Rufweiterleitung wird dabei von einer Quell-Benutzerstation versucht, eine Verbindung zu einem ziel-Benutzerstation aufzubauen, in Unkenntnis, dass für diese Benutzerstation eine Rufweiterleitung gespeichert ist. In Folge wird von der Ziel-Benutzerstation die neue Rufadresse an die Quell-Benutzerstation übermittelt, welche hierauf eine direkte Verbindung zu der neuen Benutzerstation aufbaut.

In diesem Zusammenhang ist auch die WO 00/31933, "Voice over data telecommunications network architecture", vom 2.6.2000 von Interesse, welche ein System und ein Verfahren zur Sprach- und Datenübermittlung über ein paketvermittelndes Netzwerk beschreibt, welches parallel zu einem herkömmlichen PSTN-Netz existiert und mit diesem kommuniziert. Das System ermöglicht das paketvermittelnde Schalten von Sprach- und Datenverbindungen von und zu jedem lokalen Netzbetreiber; einer Benutzerendeinrichtung oder einem Datennetz.

In der US 6,292,553, "Method and apparaLus for IP network call delivery", vom 18.9.2001 ist des weiteren ein Verfahren offenbart, bei dem ein Anrufer eine Verbindung zu einem anderen Teilnehmer über ein IP-Netzwerk lediglich durch Wahl dessen Rufnummer aufbauen kann. Sobald eine Anforderung zum Rufaufbau eingeht, greift ein Netzwerk auf eine Datenbank zu, welche Steuerbefchle zur Wegsteuerung beinhaltet. Wenn ein passender Eintrag in der Datenbank zu einem sogenannten "call atribute" gefunden wird, dann wird der Ruf entsprechend der Steuerbefehle geroutet, gegebenenfalls auch über das IP-Netzwerk sofern dies angegeben ist.

Die US 6,205,135, "Access platform for internet based telephony", vom 20.3.2001 offenbart weiterhin eine alternative zugangs-Plattform, welche an das Internet, einen lokalen Netzbetreiber und andere Kommunikationseinrichtungen angeschlossen ist. Dabei baut ein Benutzer beispielsweise eine Internet-Verbindung oder aber auch eine POTS-Verbindung zu der Zugangs-Plattform auf. Unabhängig davon wird die Verbindung entsprechend eines Profils, welches einem Benutzer zugeordnet ist, geroutet.

Schließlich ist in der D5, WO 97/28628, "Hybrid network for real-time phone-to-phone communications", vom 7.8.1997 ein Verfahren und ein System offenbart, das einem Teilnehmer in einem herkömmlichen Telefonnetz ermöglicht, Ferngespräche über ein paketvermittelndes Datennetz zu führen, um so Kosten für Gesprächsgebühren einzusparen. Um ein Ferngespräch zu führen, muss der Teilnehmer lediglich die Adresse eines Quell-Servers und die Zielrufnummer angeben. Der Quell-Server bestimmt hierauf zu welchem Ziel-Server die Verbindung aufzubauen ist. Der Ziel-Server wählt in Folge die Zielrufnummer und baut die Verbindung zwischen den Gesprächspartnern auf.

Der Erfindung liegt daher die Aufgabe zugrunde, einen besonders einfachen Weg zum Schalten einer Verbindung von einer rufenden Teilnehmerstelle zu einer anzurufende Teiln ehmerstelle anzugeben, für die eine Rufumleitung zu einer anderen Teilnehmerstelle gespeichert wird.

Gelöst wird die vorstehend aufgezeigte Aufgabe durch ein Verfahren der eingangs genannten Art,
- bei dem im Zuge einer Signalisierungsverbindung zu der anzurufenden Teilnehmerstelle in den Steuereinrichtungen, welche in diese Signalisierungsverbindung einbezogenen sind, jeweils eine erste Steuerungs- und/oder Signalisierungsinformation, welche die Rufnummern der anrufenden und anzurufenden Teilnehmerstellen umfasst, gespeichert wird,
- bei dem die Steuereinrichtung von der Vermittlungsstelle, die mit der.Steuereinrichtung verbunden ist und an der die anzurufende Teilnehmerstelle bisher erreichbar war, eine zweite Steuerungs- und/oder Signalisierungsinformation über die Vermittlungsstelle zugeführt erhält, an der die betreffende anzurufende Teilnehmerstelle nunmehr erreichbar ist,
- bei dem diese Steuereinrichtung aus einem Vergleich der ersten mit der zweiten Steuerungs- bzw. Signalisierungsinformation das Vorliegen einer Rufumleitungssituation erkennt und
- bei dem die Kommunikationsverbindung zu dieser andere Vermittlungsstelle von der Steuereinrichtung an Hand der zweiten Steuerungs- und/oder Signalisierungsinformation direkt über die Übergangseinrichtung, welche diese Vermittlungsstelle mit dem zweiten Kommunikationsnetz verbindet, aufgebaut wird.

Damit ergibt sich einerseits der Vorteil, dass im Falle einer Anrufweiterleitung zu einer anzurufenden Teilnehmerstelle die Kommunikationssignale auch nur dieselbe Anzahl von Umsetzvorgängen zwischen erstem Kommunikationsnetz und zweiten Kommunikationsnetz erfahren wie im Falle einer normalen Verbindung zwischen zwei Teilnehmerstellen, andererseits aber auch eine relativ einfache und sichere Signalisierungsprozedur für die Herstellung der Kommunikationsverbindung zwischen anrufender Teilnehmerstelle und anzurufender Teilnehmerstelle verwendet werden kann. Für diese Signalisierungsprozedur können dabei in den einzelnen Vermittlungsnetzen ohnehin vorhandene Standardeinrichtungen benutzt werden, die für den Aufbau von Kommunikationsverbindungen im jeweiligen Vermittlungsnetz eingesetzt sind.

Zweckmäßigerweise wird die.genannte Signalisierungsverbindung zwischen der Vermittlungsstelle, an der die anrufende Teilnehmerstelle angeschlossen ist, und der Vermittlungsstelle an der die anzurufende Teilnehmerstelle bisher erreichbar war, über Steuereinrichtungen aufgebaut, die zum einen mit den betreffenden Vermittlungsstellen und den mit diesen verburidenen Übergangseinrichtungen verbunden sind und die zum anderen miteinander verbunden sind. Dies ermöglicht in vorteilhafter Weise eine besonders flexible Herstellung von Signalisierungsverbindungen zwischen anrufenden und anzurufenden Teilnehmerstellen innerhalb des gesamten Vermittlungssystems. Dabei können in den einzelnen Vermittlungsnetzen ohnehin vorhandene Standardeinrichtungen benutzt werden, die für den Aufbau von Kommunikationsvcrbindungcn im jeweiligen vermittlungsnetz eingesetzt sind.

Zweckmäßigerweise wird die jeweilige Signalisierungsverbindung zwischen der jeweiligen anrufenden Teilnehmerstelle und der jeweils anzurufenden Teilnehmerstelle in entsprechender Weise behandelt wie die jeweilige Kommunikationsverbindung zwischen den betreffenden Teilnehmerstellen. Dies bringt den Vorteil mit sich, dass eine Signalisierungsverbindung nach Erkennen einer Rufumleitungssituation bezüglich der anzurufenden Teilnehmerstelle nicht mehr über diejenige Vermittlungsstelle des ersten Kommunikationsnetzes geleitet werden muß, an der die anzurufende Teilnehmerstelle bisher erreichbar war, was eine Entlastung der Signalisierungsverarbeitung bedeutet.

vorzugsweise werden die in den genannten Steuereinrichtungen der an der jeweiligen Verbindung beteiligten Übergangseinrichtungen gespeicherten Steuerungs- bzw. Signalisierungsinformationen nach Beendigung der Kommunikationsverbindung zwischen den jeweils miteinander verbundenen Teilnehmerstellen gelöscht. Hierdurch ist sichergestellt, dass nach Beendigung der jeweiligen Kommunikationsverbindung keine unnötigen Informationen bzw. Daten mehr in den Steuereinrichtungen zurückbleiben.

Anhand einer Zeichnung wird die Erfindung nachstehend beispielsweise näher erläutert.

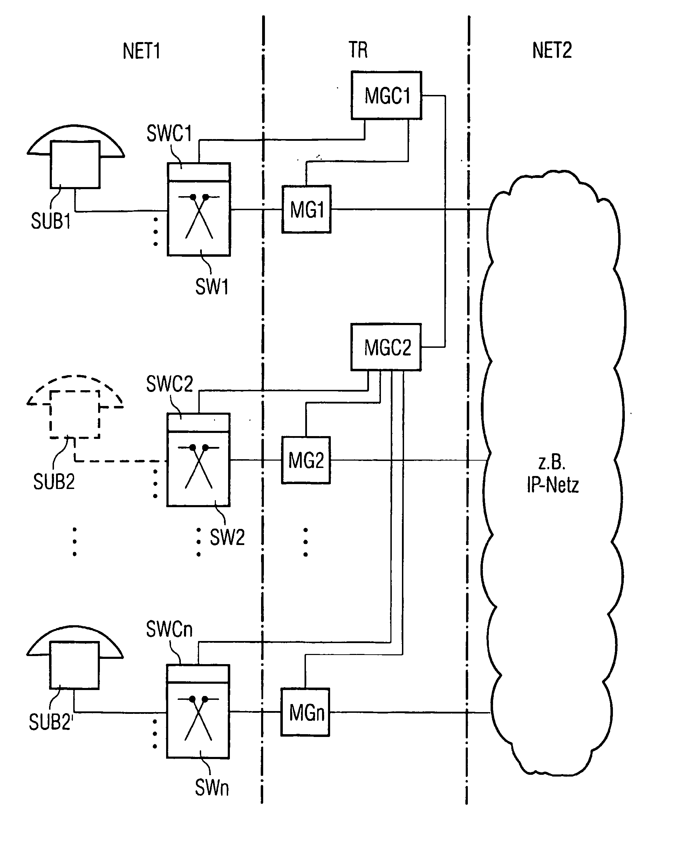

In der Zeichnung ist ein Beispiel eines Vermittlungssystems veranschaulicht, welches aus zwei unterschiedlichen Kommunikationsnetzen NET1 und NET2 besteht, die über einen Übergangsbereich TR miteinander verbunden sind.

Zu dem in der Zeichnung dargestellten Vermittlungssystem gehört ein erstes Kommunikationsnetz NET1, bei dem es sich beispielsweise um ein Zeitmultiplex-Vermittlungssystem, wie das kommerziell im Einsatz befindliche System EWSD, handeln kann. Dieses erste Kommunikationsnetz NET1 weist eine Anzahl von Vermittlungsstelle SW1, SW2 bis SWn auf, die mit eigenen, hier nur schematisch angedeuteten Steuereinrichtungen SWC1, SWC2 bis SWCn ausgestattet sind. Diese Steuereinrichtungen SWC1 bis SWCn dienen sowohl der Einstellung der jeweiligen Vermittlungsstelle nach Maßgabe von Steuerungs- und/oder Signalisierungsinformationen, insbesondere Wahlinformationen, von Teilnehmerstellen, die an der jeweiligen Vermittlungsstelle angeschlossen sind, als auch zur Aufnahme und Weiterleitung solcher Steuerungs- und/oder Signalisierungsinformationen von bzw. zu dem in der Zeichnung dargestellten Übergangsbereich TR.

An den Vermittlungsstellen SW1 bis SWn des ersten Kommunikationsnetzes NET1 ist eine Vielzahl von Teilnehmerstellen angeschlossen, die Fernsprechteilnehmerendgeräte, Faximilegeräte, Datenendgeräte, PCs oder andere Kommunikationsendgeräte umfassen können. In der Zeichnung ist bezüglich der Vermittlungsstelle SW1 lediglich eine derartige Teilnehmerstelle SUB1 angedeutet. Ferner sind in der Zeichnung bezüglich der Vermittlungsstellen SW2 und SWn noch Teilnehmerstellen SUB2 und SUB2' angedeutet, wobei die Teilnehmerstelle SUB2 durch gestrichelte Linien dargestellt ist. Hierdurch soll zum Ausdruck gebracht sein, dass die Teilnehmerstelle SUB2 bisher an der Vermittlungsstelle SW2 des ersten Kommunikationsnetzes NET1 erreichbar war, nunmehr aber als Teilnehmerstelle SUB2' an der Vermittlungsstelle SWn des ersten Kommunikationsnetzes NET1 erreichbar ist.

Das zweite Kommunikationsnetz NET2, das beispielsweise ein Paket-Vermittlungsnetz sein kann in welchem Kommunikationssignale als ATM-Signale oder als IP-Signale übertragen werden, wie zum Beispiel im Internet und das demgemäß zum Beispiel durch ein IP-Netz gebildet sein kann, ist in der Zeichnung nur schematisch angedeutet.

Wie aus der Zeichnung ersichtlich ist, sind die Vermittlungsstellen SW1 bis SWn des ersten Kommunikationsnetzes NET1 mit dem zweiten Kommunikationsnetz NET2 über den bereits erwähnten Übergangsbereich TR verbunden. Zu diesem Übergangsbereich TR gehören einzelne bzw. gesonderte Übergangseinrichtungen MG1, MG2 bis MGn, über die die Vermittlungsstellen SW1, SW2 bis SWn des ersten Kommunikationsnetzes NET1 mit dem zweiten Kommunikationsnetz NET2 verbunden sind. Zum anderen gehören zu dem betreffenden Übergangsbereich TR Steuereinrichtungen, wie MGC1 und MGC2, die den gerade erwähnten Übergangseinrichtungen MG1 bzw. MG2, MGn und den Vermittlungsstellen SW1 bzw. SW2, SWn des ersten Kommunikationsnetzes NET1 zugeordnet sind und die überdies miteinander verbunden sind. Über diese Steuereinrichtungen, von denen der Zeichnung lediglich die beiden Steuereinrichtungen MGC1 und MGC2 dargestellt sind, erfolgt der Aufbau von Signalisierungsverbindungen zwischen anrufenden und anzurufenden Teilnehmerstellen, deren Kommunikationsverbindungen dann über die zugehörigen Vermittlungsstellen des ersten Kommunikationsnetzes NET1, die Übergangseinrichtung MG1 bis MGn des Übergangsbereichs TR und das zweite Kommunikationsnetz NET2 aufgebaut werden. Die dabei ausgeführten Verfahrensschritte werden nachstehend im Zusammenhang mit einer Anrufumleitungssituation bezüglich einer anzurufenden Teilnehmerstelle näher erläutert.

Gemäß der Erfindung erfolgt die Herstellung einer Kommunikationsverbindung zwischen einer anrufenden Teilnehmerstelle, wie der in der Zeichnung dargestellten Teilnehmerstelle SUB1, die an der Vermittlungsstelle SW1 des ersten Kommunikationsnetzes NET1 angeschlossen ist, und einer anzurufenden Teilnehmerstelle, die bisher als Teilnehmerstelle SUB2 an der Vermittlungsstelle SW2 des ersten Kommunikationsnetzes NET1 erreichbar war, die allerdings nunmehr an einer anderen Vermittlungsstelle, nämlich an der Vermittlungsstelle SWn des ersten Kommunikationsnetzes NET1 erreichbar ist und die dort als SUB2' bezeichnet ist, nachdem zuvor eine Signalisierungsverbindung aufgebaut worden ist. Im Hinblick auf die anzurufende Teilnehmerstelle ist anzumerken, dass die Teilnehmerstelle SUB2' nach wie vor unter der Rufnummer erreichbar sein soll, die von der anrufenden Teilnehmerstelle SUB1 für die Herstellung einer Kommunikationsverbindung zu der betreffenden anzurufenden Teilnehmerstelle gewählt worden ist.

Die vorstehend erwähnte Signalisierungsverbindung wird zunächst von der anrufenden Teilnehmerstelle SUB1 über die Vermittlungsstelle SW1 bzw. über die dieser zugehörige Steuereinrichtung SWC1, sodann über die mit dieser Vermittlungsstelle SW1 verbundene Steuereinrichtung MGC1 des Übergangsbereichs TR sowie von der Steuereinrichtung MGC1 zu der Steuereinrichtung MGC2 hin aufgebaut, die der Vermittlungsstelle SW2 zugehörig ist, an der die anzurufende Teilnehmerstelle SUB2 bisher erreichbar war. Das zweite Kommunikationsnetz NET2 ist in diese Signalisierungsverbindung nicht einbezogen.

In den Steuereinrichtungen MGC1, MGC2 des Übergangssystems wird im Zuge der jeweiligen Signalisierungsverbindung eine die Rufnummer der jeweils anrufenden Teilnehmerstelle und der jeweils anzurufenden Teilnehmerstelle umfassende Steuerungs- bzw. Signalisierungsinformation gespeichert. Von der Steuereinrichtung MGC2 wird im Zuge der gerade betrachteten Signalisierungsverbindung eine Steuerungs- bzw. Signalisierungsinformation an die Vermittlungsstelle SW2 des ersten Kommunikationsnetzes NET1 abgegeben, an der die anzurufende Teilnehmerstelle SUB2 bisher erreichbar war. Diese anzurufende Teilnehmerstelle SUB2 hat in der Vermittlungsstelle SW2 ihre Rufumleitungs- bzw. Umzugsadresse hinterlassen, das heißt diejenige Rufnummer, unter der die betreffende anzurufende Teilnehmerstelle SUB2 nunmehr erreichbar ist, und zwar im vorliegenden Falle an einer anderen Vermittlungsstelle des ersten Kommunikationsnetzes NET1. Im dargestellten Beispiel ist dies die Vermittlungsstelle SWn des ersten Kommunikationsnetzes NET1, in welchem die betreffende anzurufende Teilnehmerstelle nunmehr als SUB2' erreichbar ist.

Die Steuereinrichtung MGC2 erhält daraufhin von der Vermittlungsstelle SW2 eine Steuerungs- bzw. Signalisierungsinformation zurück, welche die Rufnummer der anrufenden Teilnehmerstelle (SUB1), die Rufnummer der anzurufenden Teilnehmerstelle (SUB2) und die Anrufumleitungsnummer (SUB2') der betreffenden anzurufenden Teilnehmerstelle aufweist. Die Steuereinrichtung MGC2 vergleicht diese Information mit der zuvor erwähnten, in ihr gespeicherten Information bezüglich anrufender Teilnehmerstelle und anzurufender Teilnehmerstelle. Aus diesem Vergleich erkennt die Steuereinrichtung MGC2, dass es sich im vorliegenden Fall um eine Rufumleitungssituation handelt, dass also die gewünschte anzurufende Teilnehmerstelle SUB2 nicht mehr an der Vermittlungsstelle SW2 erreichbar ist. Die Steuereinrichtung MGC2 erkennt ferner aus dem betreffenden Vergleich, wo die gewünschte anzurufende Teilnehmerstelle nunmehr erreichbar ist. Sie veranlaßt daraufhin gegebenenfalls zusammen mit der oben erwähnten Steuereinrichtung MGC1, dass eine Kommunikationsverbindung zwischen der anrufenden Teilnehmerstelle SUB1 und der Teilnehmerstelle SUB2' über die Vermittlungsstelle SW1 des ersten Kommunikationsnetzes, die Übergangseinrichtung MG1 des Übergangsbereichs TR, das zweite Kommunikationsnetz NET2, die Übergangseinrichtung MGn des Übergangsbereichs TR und die Vermittlungsstelle SWn aufgebaut wird als derjenigen Vermittlungsstelle, an der die anzurufende Teilnehmerstelle SUB2' nunmehr erreichbar ist.

Durch die vorstehend erläuterte Verfahrensweise ist erreicht, dass bei Vorliegen einer Rufumleitungssituation bezüglich einer anzurufenden Teilnehmerstelle in die zwischen anrufender Teilnehmerstelle und anzurufender Teilnehmerstelle herzustellende Kommunikationsverbindung lediglich zwei Vermittlungsstellen des ersten Kommunikationsnetzes NET1 und damit nur zwei Übergangseinrichtungen, wie die Übergangseinrichtungen MG1 und MGn bei dem erläuterten Beispiel, für eine Verbindung über das zweite Kommunikationsnetz NET2 einbezogen sind.

Nachdem in beiden Kommunikationsnetzen NET1 und NET2 unterschiedliche Übertragungsprozeduren und -formate für Kommunikationssignale realisiert sind, wie dies eingangs erwähnt worden ist, ist auch im Falle der erläuterten Rufumleitungssituation nur eine zweifache Kommunikationssignalumsetzung erforderlich. Damit ist auch in diesem Falle die Qualität der Signalübertragung dieselbe wie im Falle einer normalen Verbindung zwischen einer an einer Vermittlungsstelle des ersten Kommunikationsnetzes NET1 angeschlossenen Teilnehmerstelle und einer an einer anderen Vermittlungsstelle desselben Kommunikationsnetzes NET1 angeschlossenen anzurufenden Teilnehmerstelle.

Die Signalisierungsverbindung zwischen der jeweiligen anrufenden Teilnehmerstelle und der jeweils anzurufenden Teilnehmerstelle kann in entsprechender Weise behandelt werden wie die Kommunikationsverbindung zwischen den betreffenden Teilnehmerstellen. Dies heißt bezogen auf das zuvor erläuterte Ausführungsbeispiel gemäß der Erfindung, dass die Signalisierungsverbindung zwischen der anrufenden Teilnehmerstelle SUB1 und der Vermittlungsstelle SW2, an der die anzurufende Teilnehmerstelle SUB2 bisher erreichbar war, nach Erkennen der Rufumleitungssituation bezüglich dieser anzurufenden Teilnehmerstelle zukünftig nicht mehr über diese Vermittlungsstelle SW2 geleitet wird, sondern von der Steuereinrichtung MGC2 direkt zur Vermittlungsstelle SWn hin abgegeben bzw. von dieser aufgenommen wird, an der die anzurufende Teilnehmerstelle SUB2' nunmehr erreichbar ist.

Um eine Entlastung der einzelnen Steuereinrichtungen des dargestellten Vermittlungssystems nach Beendigung der jeweils hergestellten Verbindungen zu erreichen, werden die in den genannten Steuereinrichtungen der an der jeweiligen Verbindung beteiligten Übergangseinrichtung gespeicherten Steuerungs- bzw. Signalisierungsinformationen nach Beendigung der Kommunikationsverbindung zwischen den jeweils miteinander verbundenen Teilnehmerstellen gelöscht. Dadurch ist sichergestellt, dass in den betreffenden Steuereinrichtungen nur Informationen über tatsächlich bestehende Verbindungen enthalten sind.

Abschließend sei noch angemerkt, dass bei dem in der Zeichnung dargestellten Ausführungsbeispiel die Steuereinrichtung MGC₂ als eine Steuereinrichtung dargestellt ist, die sowohl den Vermittlungsstellen SW2 und SWn des ersten Kommunikationsnetzes NET1 als auch den Übergangseinrichtungen MG2 und MGn des Übergangssystems TR zugehörig ist, über die die betreffenden Vermittlungsstellen SW2, SWn mit dem zweiten Kommunikationsnetz NET2 verbunden sind. Es dürfte jedoch ohne weiteres einzusehen sein, dass jeder Vermittlungsstelle des ersten Kommunikationsnetzes NET1 eine entsprechende Steuereinrichtung des Steuerbereichs TR zugeordnet sein kann, über die die betreffende Vermittlungsstelle mit dem zweiten Kommunikationsnetz NET2 verbunden ist. In diesem Falle erfolgt eine entsprechende Übertragung der Steuerungs- und/oder Signalisierungsinformation zwischen den einzelnen Steuereinrichtungen wie bei der Übertragung zwischen den Steuereinrichtungen MGC1 und MGC2, so dass die Herstellung der jeweils gewünschten Kommunikationsverbindung zwischen anrufender Teilnehmerstelle und anzurufender Teilnehmerstelle praktisch so abläuft, wie dies oben erläutert worden ist.

## Patentansprüche

1. Verfahren zur Herstellung einer Kommunikationsverbindung zwischen anrufenden und anzurufenden Teilnehmerstellen,
- wobei die Teilnehmerstellen (SUB1, SUB2, SUB2') an Vermittlungsstellen (SW1 .. SWn) eines ersten Kommunikationsnetzes (NET1) angeschlossen sind,
- wobei die Vermittlungsstellen (SW1..SWn) mittels Übergangseinrichtungen (MG1..MGn) durch ein zweites Kommunikationsnetz (NET2) miteinander verbunden sind,
- wobei den Übergangseinrichtungen (MG1..MGn) gesonderte Steuereinrichtungen (MGC1, MGC2) zugeordnet sind, die einen Verbindungsverkehr über die ihnen jeweils zugeordneten Übergangseinrichtungen (MG1..MGn) steuern und
- wobei für eine anzurufende Teilnehmerstelle (SUB2) an einer ersten der Vermittlungsstellen (SW2) in der ersten Vermittlungsstelle (SW2) eine Rufumleitung zu einer anderen Teilnehmerstelle (SUB2') an einer zweiten der Vermittlungsstellen (SWn) gespeichert wird,
**dadurch gekennzeichnet,**
- **dass** im Zuge einer Signalisierungsverbindung zu der anzurufenden Teilnehmerstelle (SUB2) in den Steuereinrichtungen (MGC1, MGC2), welche in diese Signalisierungsverbindungen einbezogen sind, jeweils eine erste Steuerungs- und/oder Signalisierungsinformation, welche die Rufnummern der anrufenden und anzurufenden Teilnehmerstellen (SUB1, SUB2) umfasst, gespeichert wird,
- **dass** eine erste der Steuereinrichtungen (MGC2) mit der ersten Vermittlungsstelle (SW2) verbunden ist, an der die anzurufende Teilnehmerstelle (SUB2) bisher erreichbar war, und dass die erste Steuereinrichtung (MGC2) von der der ersten Vermittlungsstelle (SW2) in Form einer Anrufumleitungsnummer eine zweite Steuerungs- und/oder Signalisierungsinformation über die zweite Vermittlungsstelle (SWn) zugeführt erhält, an der die betreffende anzurufende Teilnehmerstelle (SUB2') nunmehr erreichbar ist,
- **dass** die erste Steuereinrichtung (MGC2) aus einem Vergleich der ersten mit der zweiten Steuerungs- und/oder Signalisierungsinformation das Vorliegen einer Rufumleitungssituation erkennt und
- **dass** die Kommunikationsverbindung zu der zweiten Vermittlungsstelle (SWn) von der ersten Steuereinrichtung (MGC2) an Hand der zweiten Steuerungs- und/oder Signalisierungsinformation direkt über die Übergangseinrichtung (MGn), welche die zweite Vermittlungsstelle (SWn) mit dem zweiten Kommunikationsnetz (NET2) verbindet, aufgebaut wird.

2. Verfahren nach Anspruch 1, **dadurch gekennzeichnet, dass** die Signalisierungsverbindung zwischen der Vermittlungsstelle (SW1), an der die rufende Teilnehmerstelle angeschlossen ist, und der Vermittlungsstelle (SW2), an der die anzurufende Teilenehmerstelle (SUB2) bisher erreichbar war, über Steuereinrichtungen (MGC1, MGC2) erfolgt, die zum einen mit den betreffenden Vermittlungsstellen (SW1, SW2) und den mit diesen verbundenen Übergangseinrichtungen (MG1 bis MGn) verbunden sind und die zum anderen miteinander verbunden sind.

3. Verfahren nach Anspruch 1 oder 2, **dadurch gekennzeichnet, dass** die jeweilige Signalisierungsverbindung zwischen der jeweiligen anrufenden Teilnehmerstelle und der jeweils anzurufenden Teilnehmerstelle in entsprechender Weise behandelt wird wie die Kommunikationsverbindung zwischen den betreffenden Teilnehmerstellen.

4. Verfahren nach einem der Ansprüche 1 bis 3, **dadurch gekennzeichnet, dass** die in den genannten Steuereinrichtungen (MGC1, MGC2) der an der jeweiligen Verbindung beteiligten Übergangseinrichtungen (MG1 bis MGn) gespeicherten Steuerungs- und/oder Signalisierungsinformationen nach Beendigung der Kommunikationsverbindung zwischen den jeweils miteinander verbundenen Teilnehmerstellen gelöscht werden.

## Claims

1. Method for establishing a communication link between calling subscriber stations and subscriber stations to be called,
- wherein the subscriber stations (SUB1, SUB2, SUB2') are connected to switching centres (SW1..SWn) of a first communication network (NET1),
- wherein the switching centres (SW1..SWn) are connected to one another by a second communication network (NET2) by means of media gateways (MG1..MGn),
- wherein separate controllers (MGC1, MGC2) are allocated to the media gateways (MG1..MGn), which controllers control a connection traffic via the media gateways (MG1..MGn) allocated to them in each case, and
- wherein, for a subscriber station to be called (SUB2) at a first one of the switching centres (SW2), a call diversion to another subscriber station (SUB2') at a second one of the switching centres (SWn) is stored in the first switching centre (SW2),
**characterized in that**
- in the course of a signalling link to the subscriber station to be called (SUB2), in each case a first control and/or signalling information item which comprises the directory numbers of the calling subscriber stations and subscriber stations to be called (SUB1, SUB2) are stored in the controllers (MGC1, MGC2) which are included in these signalling links,
- that a first one of the controllers (MGC2) is connected to the first switching centre (SW2) at which the subscriber station to be called (SUB2) could previously be reached, and that the first controller (MGC2) is supplied by the first switching centre (SW2) with a second control and/or signalling information item in the form of a call diversion number, about the second switching centre (SWn) at which the relevant subscriber station to be called (SUB2') can now be reached,
- that the first controller (MGC2) recognizes from a comparison of the first control and/or signalling information item with the second one, the presence of a call diversion situation, and
- that the communication link to the second switching centre (SWn) is set up by the first controller (MGC2), by means of the second control and/or signalling information item, directly via the media gateway (MGn) which connects the second switching centre (SWn) to the second communication network (NET2).

2. Method according to Claim 1, **characterized in that** the signalling link between the switching centre (SW1) to which the calling subscriber station is connected, and the switching centre (SW2) at which the subscriber station to be called (SUB2) could previously be reached, is established via controllers (MGC1, MGC2) which, on the one hand are connected to the relevant switching centres (SW1, SW2) and the media gateways (MG1 to MGn) connected to these, and, on the other hand, are connected to one another.

3. Method according to Claim 1 or 2, **characterized in that** the respective signalling link between the respective calling subscriber station and the respective subscriber station to be called is correspondingly treated like the communication link between the relevant subscriber stations.

4. Method according to one of Claim 1 to 3, **characterized in that** the control and/or signalling information items stored in the said controllers (MGC1, MGC2) of the media gateways (MG1 to MGn) involved in the respective link are deleted after the communication link between the subscriber stations connected to one another in each case has ended.

## Revendications

1. Procédé d'établissement d'une liaison de communication entre des postes d'abonnés appelant et à appeler,
- les postes d'abonnés (SUB1, SUB2, SUB2') étant raccordés à des centraux téléphoniques (SW1 ... SWn) d'un premier réseau de communication (NET1),
- les centraux téléphoniques (SW1 ... SWn) étant raccordés entre eux au moyen de dispositifs de transition (MG1 ... MGn) par un second réseau de communication (NET2),
- des dispositifs de commande à part (MGC1, MGC2) étant affectés aux dispositifs de transition (MG1 ... MGn), ces dispositifs de commande commandant un trafic de liaison par l'intermédiaire des dispositifs de transition (MG1 ... MGn) qui leur sont respectivement affectés, et
- pour un poste d'abonné à appeler (SUB2) d'un premier des centraux téléphoniques (SW2), un renvoi d'appel vers un autre poste d'abonné (SUB2') d'un second des centraux téléphoniques (SWn) étant mémorisé dans le premier central téléphonique (SW2),
**caractérisé en ce**
- **qu'**au cours d'une liaison de signalisation vers le poste d'abonné à appeler (SUB2), une première information de commande et/ou de signalisation, laquelle comprend les numéros d'appel des postes d'abonnés appelant et à appeler (SUB1, SUB2), est respectivement mémorisée dans les dispositifs de commande (MGC1, MGC2) qui sont intégrés dans ces liaisons de signalisation,
- **qu'**un premier des dispositifs de commande (MGC2) est raccordé au premier central téléphonique (SW2) sur lequel le poste d'abonné à appeler (SUB2) était joignable jusqu'alors, et
- **que** le premier dispositif de commande (MGC2) reçoit une seconde information de commande et/ou de signalisation amenée par le premier central téléphonique (SW2) sous forme d'un numéro de renvoi d'appel, par l'intermédiaire du second central téléphonique (SWn) sur lequel le poste d'abonné concerné à appeler (SUB2') est désormais joignable,
- **que** le premier dispositif de commande (MGC2) identifie la présence d'une situation de renvoi d'appel à partir d'une comparaison de la première information de commande et/ou de signalisation avec la seconde et
- **que** la liaison de communication vers le second central téléphonique (SWn) est établie par le premier dispositif de commande (MGC2) à l'aide de la seconde information de commande et/ou de signalisation, directement par l'intermédiaire du dispositif de transition (MGn), lequel raccorde le second central téléphonique (SWn) au second réseau de communication (NET2).

2. Procédé selon la revendication 1, **caractérisé en ce que** la liaison de signalisation entre le central téléphonique (SW1), auquel le poste d'abonné appelant est raccordé, et le central téléphonique (SW2), sur lequel le poste d'abonné à appeler (SUB2) était joignable jusqu'alors, est réalisée par l'intermédiaire de dispositifs de commande (MGC1, MGC2) qui sont raccordés, d'une part, aux centraux téléphoniques concernés (SW1, SW2) et aux dispositifs de transition (MG1 à MGn) raccordés à ceux-là, et qui, d'autre part, sont raccordés entre eux.

3. Procédé selon la revendication 1 ou 2, **caractérisé en ce que** la liaison de signalisation respective entre le poste d'abonné appelant respectif et le poste d'abonné à appeler respectivement est traitée de manière correspondante, comme la liaison de communication entre les postes d'abonnés concernés.

4. Procédé selon l'une quelconque des revendications 1 à 3, **caractérisé en ce que** les informations de commande et/ou de signalisation mémorisées dans lesdits dispositifs de commande (MGC1, MGC2) des dispositifs de transition (MG1 à MGn) prenant part à la liaison respective sont supprimées après l'achèvement de la liaison de communication entre les postes d'abonnés respectivement raccordés entre eux.
